# EUROPEAN PATENT APPLICATION

(11) **EP 2 518 795 A1**
(43) Date of publication of application: **31.10.2012**
(21) Application number: 10808886.5
(22) Date of filing: 22.01.2010
(51) Int. Cl.: H01M 4/02, H01M 10/0525, H01M 10/0562, H01M 10/28, H01M 12/06, H01M 12/08

(54) **NEGATIVE ELECTRODE STRUCTURE FOR AQUEOUS ELECTROLYTE BATTERY, AND AQUEOUS ELECTROLYTE BATTERY COMPRISING THE NEGATIVE ELECTRODE STRUCTURE**

(71) Applicant: Toyota Jidosha Kabushiki Kaisha, Toyota-shi, Aichi 471-8571 (JP)
(72) Inventor: HIROSE, Yutaka, Toyota-shi Aichi 471-8571 (JP); NAKANISHI, Shinji, Toyota-shi Aichi 471-8571 (JP)
(74) Representative: Bradley, Josephine Mary
(86) International application number: PCT/JP2010/050808
(87) International publication number: WO 2011/089710

(57) **Abstract**

The object of the present invention is to provide a negative electrode structure for aqueous electrolyte batteries and an aqueous electrolyte battery comprising the negative electrode structure.

The object was accomplished by a negative electrode structure for aqueous electrolyte batteries, comprising at least a negative electrode active material layer, wherein the negative electrode active material layer comprises, as the negative electrode active material, at least one selected from the group consisting of the following metals and alloys comprising at least one of the metals: Li, Na, K, Ca, Mg, Zn, Al and Ag, and wherein a solid electrolyte layer comprising a Zr-containing garnet-type solid electrolyte described by the following formula (1), is provided on one side of the negative electrode active material layer:

Formula (1) : Li₅₊ₓLa_{y}Zr_{z}O₁₂

wherein 0<x≤3, 0≤y≤3 and 0≤z≤2.

## Description

### Technical Field

The present invention relates to a negative electrode structure for aqueous electrolyte batteries and an aqueous electrolyte battery comprising the negative electrode structure.

### Background Art

A secondary battery is a battery which is able to provide electricity by converting chemical energy into electrical energy; moreover, it is a battery which is able to store (during charge) chemical energy by converting electrical energy into chemical energy by passing an electrical current in a direction that is opposite to the discharge direction. Among secondary batteries, lithium ion batteries have higher energy density, so that they are widely used as a power source for notebook personal computers, cellular phones and other portable devices.

In a lithium secondary battery using graphite (C₆) as the negative electrode active material, the reaction described by the following formula (I) proceeds at the negative electrode upon discharge:

C₆Li→C₆+Li⁺+e⁻ (I)

An electron produced by the formula (I) passes through an external circuit, which acts as an external load, and then reaches to the positive electrode. At the same time, a lithium ion (Li⁺) produced by the formula (I) is transferred through the electrolyte sandwiched between the negative and positive electrodes from the negative electrode side to the positive electrode side by electro-osmosis.

When lithium cobaltate (Li_{0.4}CoO₂) is used as a positive electrode active material, a reaction described by the following formula (II) proceeds at the positive electrode upon discharge:

Li_{0.4}CoO₂+0.6Li⁺+0.6e⁻→LiCoO₂ (II)

Upon charging the battery, reactions which are reverse to the reactions described by the above formulae (I) and (II) proceed at the negative and positive electrodes. The graphite material in which lithium was intercalated (C₆Li) becomes reusable at the negative electrode, while lithium cobaltate (Li_{0.4}CoO₂) is regenerated at the positive electrode. Because of this, discharge becomes possible again.

Conventional lithium secondary batteries have such a problem that as charge and discharge cycles are repeated, dendritic crystals grow gradually from a lithium metal electrode through an electrolyte and a short circuit is caused by the contact between the crystals and the positive electrode.
A technique for solving such a problem is disclosed in Patent Literature 1, which is a protected anode architecture comprising: an active metal anode having a first surface and a second surface; an ionically conductive protective membrane architecture in physical continuity with the first surface of the anode; an active metal anode backplane in physical continuity with the second surface of the anode; and a compliant seal structure interfacing with the protective membrane architecture and the anode backplane to enclose the anode in an anode compartment, the seal structure being compliant to changes in electrode thickness such that physical continuity between the electrode, protective architecture and backplane are maintained; wherein the ionically conductive protective membrane architecture comprises one or more materials configured to provide a first membrane surface chemically compatible with the active metal of the anode in contact with the anode, and a second membrane surface substantially impervious to and chemically compatible with an environment exterior to the anode compartment; and wherein the seal structure interfaces with the protective membrane architecture and the anode backplane such that a substantially impervious barrier between the interior and exterior of the anode compartment is provided.

### [Citation List]

### [Patent Literature]

Patent Literature 1: Japanese Patent Application National Publication (Laid-Open) No. 2009-505355

### Summary of Invention

### Technical Problem

The protected anode architecture disclosed in Patent Literature 1 was not designed in light of the resistance of the protective membrane (protection layer) to electrolytes.
The present invention was accomplished in light of the above-stated circumstance, and an object of the present invention is to provide a negative electrode structure for aqueous electrolyte batteries and an aqueous electrolyte battery comprising the negative electrode structure.

### Solution to Problem

The negative electrode structure for aqueous electrolyte batteries of the present invention is a negative electrode structure for aqueous electrolyte batteries, comprising at least a negative electrode active material layer, wherein the negative electrode active material layer comprises, as the negative electrode active material, at least one selected from the group consisting of the following metals and alloys comprising at least one of the metals: Li, Na, K, Ca, Mg, Zn, Al and Ag, and wherein a solid electrolyte layer comprising a Zr-containing garnet-type solid electrolyte described by the following formula (1), is provided on one side of the negative electrode active material layer:

Formula (1): Li₅₊ₓLa_{y}Zr_{z}O₁₂

wherein 0<x≤3, 0≤y≤3 and 0≤z≤2.

In the negative electrode structure having such a structure, the solid electrolyte layer comprises a solid electrolyte that is resistant to aqueous electrolytes, so that when the negative electrode structure is incorporated in an aqueous electrolyte-containing battery, the solid electrolyte layer is not broken and thus there is an increase in the battery durability.

An embodiment of the negative electrode structure for aqueous electrolyte batteries of the present invention is such that a non-aqueous electrolyte layer is provided between the negative electrode active material layer and the solid electrolyte layer.

The aqueous electrolyte battery of the present invention is an aqueous electrolyte battery in which a positive electrode is provided on one side of an aqueous electrolyte layer and the negative electrode structure is provided on the other side of the aqueous electrolyte layer, wherein the solid electrolyte layer of the negative electrode structure is arranged to face the aqueous electrolyte layer.

The aqueous electrolyte battery having such a structure comprises the negative electrode structure. As a result, especially the negative electrode is highly durable.

An embodiment of the aqueous electrolyte battery of the present invention is a lithium secondary battery.

An embodiment of the aqueous electrolyte battery of the present invention is a lithium-air battery.

### Advantageous Effects of Invention

According to the present invention, the solid electrolyte layer comprises a solid electrolyte that is resistant to aqueous electrolytes, so that when the negative electrode structure is incorporated in an aqueous electrolyte-containing battery, the solid electrolyte layer is not broken and thus there is an increase in battery durability.

### Brief Description of Drawings

FIG. 1 is a schematic sectional view of a first typical example of the negative electrode structure of the present invention, which is incorporated in an aqueous electrolyte battery for use.
FIG. 2 is a schematic sectional view of a second typical example of the negative electrode structure of the present invention, which is incorporated in an aqueous electrolyte battery for use.
FIG. 3 is a schematic sectional view of a first typical example of the aqueous electrolyte battery of the present invention.
FIG. 4 is a schematic sectional view of a second typical example of the aqueous electrolyte battery of the present invention.
FIG. 5 is a view showing XRD patterns of the solid electrolyte of Example 1 before (the pattern below) and after (the pattern above) the solid electrolyte was immersed in LiOH.
FIG. 6 is a view showing XRF patterns of an LiOH aqueous solution before (the pattern below) and after (the pattern above) the solid electrolyte of Example 1 was immersed in the aqueous solution.
FIG. 7 is a view showing XRD patterns of the solid electrolyte of Comparative Example 1 before (the pattern below) and after (the pattern above) the solid electrolyte was immersed in LiOH.
FIG. 8 is a view showing XRD patterns of the solid electrolyte of Comparative Example 2 before (the pattern below) and after (the pattern above) the solid electrolyte was immersed in LiOH.
FIG. 9 is a view showing XRF patterns of an LiOH aqueous solution before (the pattern below) and after (the pattern above) the solid electrolyte of Comparative Example 2 was immersed in the aqueous solution.

### Description of Embodiments

### 1. Negative electrode structure for aqueous electrolyte batteries

The negative electrode structure for aqueous electrolyte batteries of the present invention is a negative electrode structure for aqueous electrolyte batteries, comprising at least a negative electrode active material layer, wherein the negative electrode active material layer comprises, as the negative electrode active material, at least one selected from the group consisting of the following metals and alloys comprising at least one of the metals: Li, Na, K, Ca, Mg, Zn, Al and Ag, and wherein a solid electrolyte layer comprising a Zr-containing garnet-type solid electrolyte described by the following formula (1), is provided on one side of the negative electrode active material layer:

Formula (1): Li₅₊ₓLa_{y}Zr_{z}O₁₂

wherein 0<x≤3, 0≤y≤3 and 0≤z≤2.

In aqueous electrolyte batteries using a lithium metal as the negative electrode active material and an aqueous electrolyte as the electrolyte, a case has been known in which a solid electrolyte layer is provided to separate lithium (negative electrode) and an aqueous electrolyte. As the solid electrolyte used for the solid electrolyte layer, Li₂Ti(PO₄)₃-AlPO₄ (Ohara glass) is known.
Especially in lithium-air batteries comprising an air electrode as the positive electrode, at the time of discharge using an alkali metal (such as lithium) as the negative electrode active material, a lithium ion and hydroxide anion are dissolved from the negative and air electrodes, respectively, in the aqueous electrolyte. As a result, the pH of the aqueous electrolyte rapidly becomes alkaline. In conventional batteries using the Ohara glass for forming the solid electrolyte layer, it is known that since the Ohara glass is not resistant to alkaline aqueous solutions, it is dissolved in the alkaline aqueous solution and decomposed (Satoshi Hasegawa, et al., J. Power Sources, 2009, 189, 371-377). Because of this, the life of conventional batteries using the Ohara glass for the solid electrolyte layer depends on the decomposition rate of the Ohara glass and thus the life is very short. Moreover, after the decomposition of the Ohara glass, there is a possible increase in the resistance of the solid electrolyte layer comprising the Ohara glass. Also, as a result of the decomposition of the Ohara glass, the solid electrolyte layer is broken; therefore, the aqueous electrolyte layer and negative electrode active material are brought into contact with each other to cause a reaction, and an unfavorable situation (e.g., generation of hydrogen or heat) may occur.

In paragraph [0058] of Patent Literature 1, it is described to use Li₅La₃Ta₂O₁₂ as the protective membrane (protection layer) on the negative electrode. However, as described in Examples that will be explained later, the solid electrolyte used in conventional techniques (Comparative Example 3) such as Li₅La₃Ta₂O₁₂ has no resistance to aqueous electrolytes.

The negative electrode structure for aqueous electrolyte batteries of the present invention has the solid electrolyte layer between the aqueous electrolyte layer and the negative electrode active material. The solid electrolyte layer comprises a solid electrolyte that is resistant to aqueous electrolytes, so that when the negative electrode structure is incorporated in an aqueous electrolyte-containing battery, the solid electrolyte layer is not broken and thus there is an increase in battery durability.

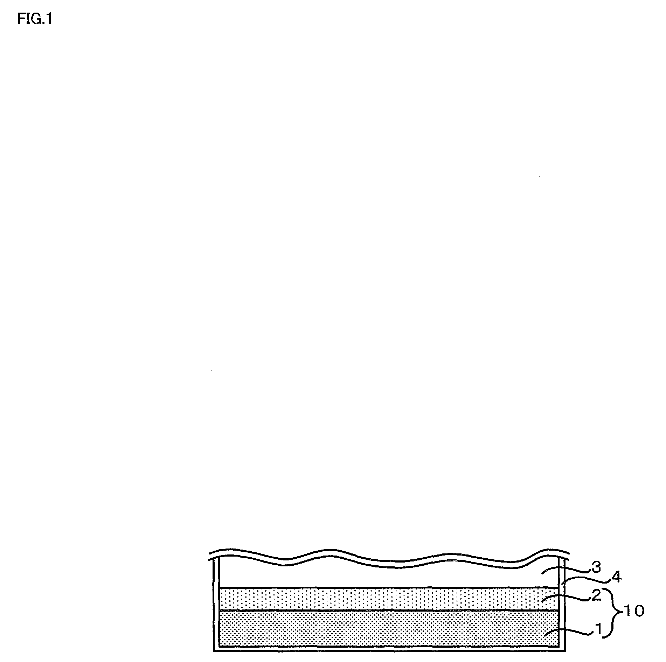

Hereinafter, a first typical example of the negative electrode structure for aqueous electrolyte batteries of the present invention will be explained. FIG. 1 is a schematic sectional view of the first typical example of the negative electrode structure of the present invention, which is incorporated in an aqueous electrolyte battery for use. The double wavy line shown in the figure means that a part of the figure is omitted.
As shown in FIG. 1, in negative electrode structure 10 of the present invention, solid electrolyte layer 2 is provided on one side of negative electrode active material layer 1; moreover, solid electrolyte layer 2 is provided so as to be present between negative electrode active material layer 1 and aqueous electrolyte 3 when negative electrode structure 10 is incorporated in an aqueous electrolyte battery. To hold the electrolyte layer, the aqueous electrolyte battery preferably has such a structure that the entire battery is stored in battery case 4.

As just described, by providing the solid electrolyte layer so as to be present between negative electrode active material layer 1 and aqueous electrolyte 3, substances which are highly reactive with water and are likely to self-discharge (even an alkali metal, for example) can be used as the negative electrode active material. As a result, it is able to use the high ion conductivity and high ion solubility of the aqueous electrolyte for charge and discharge, as well as the high energy density of an alkali metal, etc.

Solid electrolyte layer 2 comprises the Zr-containing garnet-type solid electrolyte described by the formula (1).
When large amounts of electricity is provided, in the aqueous electrolyte layer, the pH of the aqueous electrolyte is widely changed between acidic, neutral and alkaline ranges, so that the solid electrolyte layer which is in contact with the aqueous electrolyte is required to have high chemical stability. Especially in the case of an air battery, when it provides electricity, a hydroxide ion released from the air electrode and a metal ion released from the negative electrode make the aqueous electrolyte highly alkaline. As described in Examples that will be explained later, the Zr-containing garnet-type solid electrolyte described by the formula (1) has the property of being stable in alkaline aqueous solutions; therefore, it is able to supply a battery which is highly stable even when it provides large amounts of electricity.

In addition, because one side of the negative electrode active material layer is covered with the solid electrolyte layer, it is able to prevent a short circuit that is caused by the contact of a dendritic precipitate with the positive electrode, the dendritic precipitate being mainly produced at the negative electrode.

The negative electrode active material layer used in the present invention comprises, as the negative electrode active material, at least one selected from the group consisting of the following metals and alloys comprising at least one of the metals: Li, Na, K, Ca, Mg, Zn, Al and Ag. Besides the metals and alloys, a carbonaceous material such as graphite can be used as the negative electrode active material.
Examples of lithium-containing negative electrode active materials include metals, alloys, metal oxides and metal nitrides. Examples of lithium-containing alloys include a lithium-aluminum alloy, a lithium-tin alloy, a lithium-lead alloy and a lithium-silicon alloy. Examples of lithium-containing metal oxides include a lithium-titanium oxide. Examples of lithium-containing metal nitrides include a lithium-cobalt nitride, a lithium-iron nitride and a lithium-manganese nitride.

The negative electrode active material layer can comprise a negative electrode active material only, or it can comprise at least one of a conductive material and a binder in addition to the negative electrode active material. For example when the negative electrode active material is in the form of a foil, the negative electrode active material layer can be a negative electrode active material layer comprising a negative electrode active material only. When the negative electrode active material is in the form of powder, it can be a negative electrode active material layer comprising a negative electrode active material and a binder.

The conducting material contained in the negative electrode active material layer used in the present invention is not particularly limited as long as it can increase the conductivity of the negative electrode active material layer. As the conducting material, for example, there may be mentioned carbon black such as acetylene black and ketjen black. The content of the conducting material in the negative electrode active material layer varies depending on the type of conducting material, and it is normally in the range of 1% by mass to 10% by mass.

The binder contained in the negative electrode active material layer used in the present invention , there may be mentioned polyvinylidene fluoride (PVDF) and polytetrafluoroethylene (PTFE), for example. The content of the binder in the negative electrode active material layer can be an amount which can fix the negative electrode active material, etc., and it is preferably as small as possible. The content of the binder is normally in the range of 1% by mass to 10% by mass.

The negative electrode active material layer can contain a solid electrolyte material for the negative electrode, in addition to the negative electrode active material. In this case, as the solid electrolyte material for the negative electrode, there may be used a solid oxide electrolyte, a solid sulfide electrolyte, a polymer electrolyte, a gel electrolyte, or the like.

The solid electrolyte layer used in the present invention comprises a Zr-containing garnet-type solid electrolyte.
As the Zr-containing garnet-type solid electrolyte, in particular, there may be mentioned a solid electrolyte described by Li₃₊ₓA_{y}G_{z}M₂₋ᵥBᵥO₁₂ (hereinafter may be referred to as compound (I)). A, G, M and B are metal cations. Preferably, x satisfies 0≤x≤5, more preferably 4≤x≤5. Preferably, y satisfies 0≤y≤3, more preferably 0≤y≤2. Preferably, z satisfies 0≤z≤3, more preferably 1≤z≤3. Preferably, v satisfies 0≤v≤2, more preferably 0≤v≤1. O can be partly or completely replaced with a divalent anion and/or trivalent anion, such as N³⁻.
In the compound (I), A is preferably an alkaline-earth metal cation such as Ca, Sr, Ba and Mg, or a transition metal cation such as Zn. G is preferably a transition metal cation such as La, Y, Pr, Nd, Sm, Lu and Eu. As M, there may be mentioned a transition metal cation such as Zr, Nb, Ta, Bi, Te and Sb. B is preferably In, for example.

In the compound (I), especially, it is most preferable to use the Zr-containing garnet-type solid electrolyte described by the formula (1). Specific examples of the Zr-containing garnet-type solid electrolyte include Li₇La₃Zr₂O₁₂, Li_{7.25}La₃Zr₂O₁₂ and Li_{7.5}La₃Zr₂O₁₂.

From the viewpoint of the protection of the negative electrode active material layer, the solid electrolyte layer preferably has a thickness of 1 to 3,000 µm. If the solid electrolyte layer has a thickness of less than 1 µm, the protection of the negative electrode active material layer by the solid electrolyte layer could be insufficient. If the solid electrolyte layer has a thickness of more than 3,000 µm, the solid electrolyte layer is too thick, so that the release of a metal ion from the negative electrode active material layer could be disturbed.
Examples of methods for forming the solid electrolyte layer include a solid phase method, a sol-gel method and a deposition method.

In addition to the above-mentioned negative electrode active material layer, generally, the negative electrode structure for aqueous electrolyte batteries of the present invention comprises a negative electrode current collector and a negative electrode lead that is connected to the negative electrode current collector.

The material for the negative electrode current collector of the battery of the present invention is not particularly limited as long as it is conductive. For example, there may be mentioned copper, stainless-steel, nickel and carbon. As the form of the negative electrode current collector, there may be mentioned a foil form, a plate form and a mesh (grid) form, for example. In the present invention, the below-mentioned battery case can also function as the negative electrode current collector.

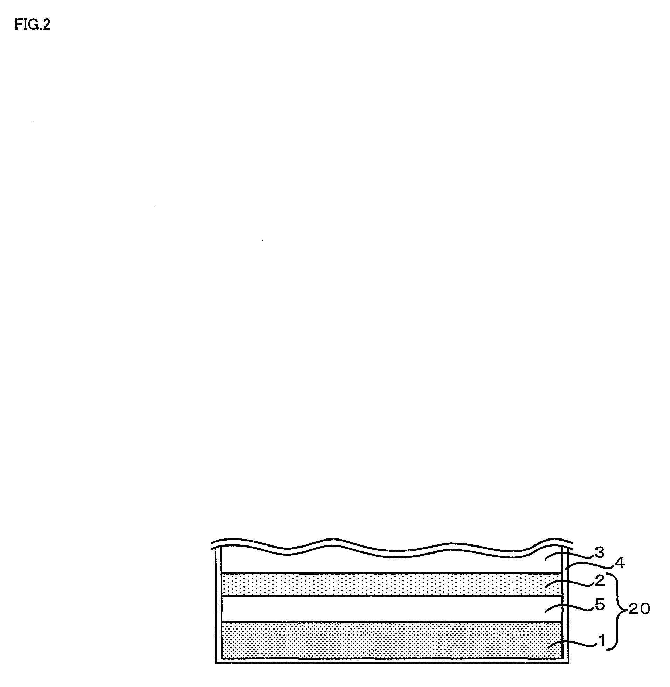

Hereinafter, a second typical example of the negative electrode structure for aqueous electrolyte batteries of the present invention will be described. FIG. 2 is a schematic sectional view of the second typical example of the negative electrode structure of the present invention, which is incorporated in an aqueous electrolyte battery for use. The double wavy line shown in the figure means that a part of the figure is omitted. The present invention is not limited to this second typical example and the above-mentioned first typical example.
As shown in FIG. 2, in negative electrode structure 20 of the present invention, solid electrolyte layer 2 is provided on one side of negative electrode active material layer 1; non-aqueous electrolyte layer 5 is provided between negative electrode active material layer 1 and solid electrolyte layer 2; and solid electrolyte layer 2 is provided so as to be present between negative electrode active material layer 1 and aqueous electrolyte 3 when negative electrode structure 20 is incorporated in an aqueous electrolyte battery. To hold the electrolyte layer, the aqueous electrolyte battery preferably has such a structure that the entire battery is stored in battery case 4.

As just described, by providing solid electrolyte layer 2 and non-aqueous electrolyte layer 5 so as to be present between negative electrode active material layer 1 and aqueous electrolyte 3, substances which are highly reactive with water and are likely to self-discharge (even an alkali metal, for example) can be used as the negative electrode active material. As a result, it is able to use the high ion conductivity and high ion solubility of the aqueous electrolyte for charge and discharge, as well as the high energy density of an alkali metal, etc.

Solid electrolyte layer 2 comprises the Zr-containing garnet-type solid electrolyte described by the formula (1). As described above in connection with the first typical example, the Zr-containing garnet-type solid electrolyte has the property of being stable in alkaline aqueous solutions; therefore, it is able to supply a battery which is highly stable even when it provides large amounts of electricity.

In addition, because the negative electrode active material layer is covered with the solid electrolyte layer, it is able to prevent a short circuit that is caused by the contact of a dendritic precipitate with the positive electrode, the dendritic precipitate being mainly produced at the negative electrode.

Unlike the first typical example, the second typical example has such a structure that non-aqueous electrolyte layer 5 is provided between negative electrode active material layer 1 and solid electrolyte layer 2, so that it is able to completely consume the negative electrode active material in negative electrode active material layer 1.

The negative electrode materials used for the second typical example (such as the negative electrode active material), the garnet-type solid electrolyte used in the solid electrolyte layer, etc., are the same as those of the first typical example.

It is preferable to appropriately select the type of non-aqueous electrolyte of the non-aqueous electrolyte layer, depending on the type of metal ion to be conducted. For example, the non-aqueous electrolyte for lithium-air batteries generally contains a lithium salt and a non-aqueous solvent. As the lithium salt, for example, there may be mentioned an inorganic lithium salt such as LiPF₆, LiBF₄, LiClO₄ and LiAsF₆, and an organic lithium salt such as LiCF₃SO₃, LiN(SO₂CF₃)₂(Li-TFSI), LiN(SO₂C₂F₅)₂ and LiC(SO₂CF₃)₃. As the non-aqueous solvent, for example, there may be mentioned ethylene carbonate (EC), propylene carbonate (PC), dimethyl carbonate (DMC), diethyl carbonate (DEC), ethyl methyl carbonate (EMC), ethyl carbonate, buthylene carbonate, Υ-butyrolactone, sulfolane, acetonitrile, 1,2-dimethoxymethane, 1,3-dimethoxypropane, diethyl ether, tetrahydrofuran, 2-methyltetrahydrofuran and mixtures thereof. The non-aqueous solvent is preferably a solvent with high oxygen solubility, so that dissolved oxygen can be efficiently used for reaction. The concentration of the lithium salt in the non-aqueous electrolyte is in the range of 0.5 mol/L to 3 mol/L, for example.

Other examples of the non-aqueous electrolyte include an ionic liquid.
The ionic liquid is a substance comprising ionic molecules only, each of the molecules being a combination of a cation and an anion. It also refers to a substance that is liquid at room temperature (15°C to 25°C).

As the cation species of the ionic liquid, which can be used in the present invention, there may be mentioned an imidazolium such as 2-ethylimidazolium, 3-propylimidazolium, 1-ethyl-3-methylimidazolium, 1-butyl-3-methylimidazolium and 1,3-dimethylimidazolium, an ammonium such as diethylmethylammonium, tetrabutylammonium, cyclohexyltrimethylammonium, methyltri-n-octylammonium, triethyl(2-methoxyethoxymethyl) ammonium, benzyldimethyltetradecylammonium and benzyltrimethylammonium, alkylpyridinium, dialkylpyrrolidinium, tetraalkylphosphonium, trialkylsulfonium, etc.

As the anion species of the ionic liquid, which can be used in the present invention, there may be mentioned a halide anion such as Cl⁻, Br⁻ and I⁻, a boride anion such as BF₄⁻, B (CN)₄⁻ and B (C₂O₄) ₂⁻, an amide anion or imide anion such as (CN)₂N⁻, [N (CF₃)₂]⁻ and [N(SO₂CF₃)₂]⁻, a sulfate anion or sulfonate anion such as RSO₃⁻ (hereinafter, R refers to an aliphatic hydrocarbon group or aromatic hydrocarbon group), RSO₄⁻, R^{f}SO₃⁻ (hereinafter, R^{f} refers to a fluorine-containing halogenated hydrocarbon group) and R^{f}SO₄⁻, a phosphate anion such as R^{f}₂P(O)O⁻, PF₆⁻, R^{f}₃PF₃⁻, an antimonate anion such as SbF₆, a lactate anion, a nitrate anion, a trifluoroacetate anion, etc.

Furthermore, a supporting salt can be dissolved in the ionic liquid. As the supporting salt, there may be mentioned a salt comprising a lithium ion and any of the above anions, such as LiPF₆, LiBF₄, LiClO₄, LiTFSI and LiBETI. Two or more kinds of such supporting salts can be used in combination. The added amount of the supporting salt to the ionic liquid is not particularly limited and is preferably about 0.1 to 1 mol/kg.

### 2. Aqueous electrolyte battery

The aqueous electrolyte battery of the present invention is an aqueous electrolyte battery in which a positive electrode is provided on one side of an aqueous electrolyte layer and the negative electrode structure is provided on the other side of the aqueous electrolyte layer, wherein the solid electrolyte layer of the negative electrode structure is arranged to face the aqueous electrolyte layer.

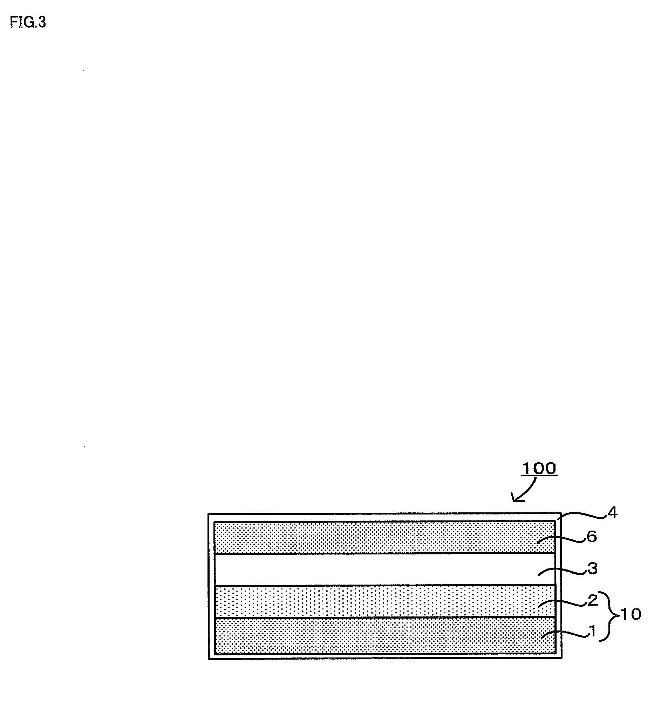

Hereinafter, a first typical example of the aqueous electrolyte battery of the present invention will be described. FIG. 3 is a schematic sectional view of the first typical example of the aqueous electrolyte battery of the present invention.
As shown in FIG. 3, in aqueous electrolyte battery 100 of the present invention, positive electrode active material layer 6, which is a part of the positive electrode, is provided on one side of aqueous electrolyte layer 3; the above-mentioned first typical example of the negative electrode structure is provided on the other side of the same; and solid electrolyte layer 2 of negative electrode structure 10 is arranged to face aqueous electrolyte layer 3. To hold the electrolyte layer, aqueous electrolyte battery 100 preferably has such a structure that the entire battery is stored in battery case 4.

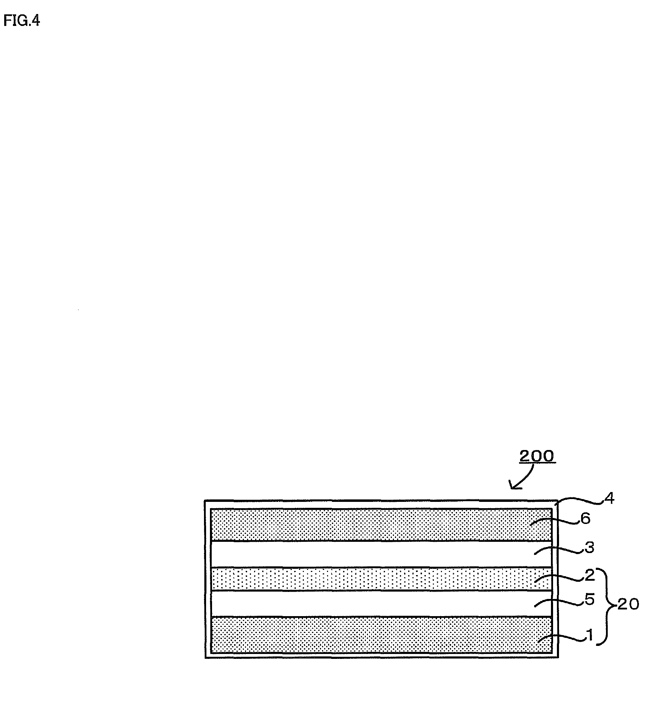

Hereinafter, a second typical example of the aqueous electrolyte battery of the present invention will be described. FIG. 4 is a schematic sectional view of the second typical example of the aqueous electrolyte battery of the present invention. The present invention is not limited to the second typical example and the above-mentioned first typical example, however.
As shown in FIG. 4, in aqueous electrolyte battery 200 of the present invention, positive electrode active material layer 6, which is a part of the positive electrode, is provided on one side of aqueous electrolyte layer 3; the above-mentioned second typical example of the negative electrode structure is provide on the other side of the same; and solid electrolyte layer 2 of negative electrode structure 20 is arranged to face aqueous electrolyte layer 3. To hold the electrolyte layer, aqueous electrolyte battery 200 preferably has such a structure that the entire battery is stored in battery case 4.

The above-mentioned two typical examples of the aqueous electrolyte battery of the present invention comprise the negative electrode structure of the present invention each, so that especially their negative electrodes are highly durable.

The type of the battery of the present invention is not particularly limited as long as it is an aqueous electrolyte battery in which the positive electrode is provided on one side of the aqueous electrolyte layer and the negative electrode is provided on the other side of the same.
Specific examples of the battery of the present invention include a lithium secondary battery and a lithium-air battery.

Hereinafter, other constituents of the battery of the present invention (other than the negative electrode) will be described in order, which are the positive electrode, the aqueous electrolyte layer, and others.

### 2-1. Positive electrode

The positive electrode of the battery of the present invention preferably comprises a positive electrode active material layer comprising a positive electrode active material. In addition to this, it generally comprises a positive electrode current collector and a positive electrode lead that is connected to the positive electrode current collector. When the battery of the present invention is a metal-air battery, in place of the positive electrode, the battery has an air electrode comprising an air electrode layer. The positive electrode used in the present invention is preferably an electrode that can be used with general alkaline electrolytes.

### [Positive electrode active material layer]

An embodiment will be described hereinafter, in which an electrode comprising a positive electrode active material layer is employed as the positive electrode.
For example, when the battery of the present invention is a lithium secondary battery or lithium-air battery, as the positive electrode active material used in the present invention, in particular, there may be mentioned LiCoO₂, LiNi_{1/3}Mn_{1/3}Co_{1/3}O₂, LiNiPO₄, LiMnPO₄, LiNiO₂, LiMn₂O₄, LiCoMnO₄, Li₂NiMn₃O₈, Li₃Fe₂(PO₄)₃ and Li₃V₂(PO₄)₃, etc. Of these, LiCoO₂ is preferably used as the positive electrode active material in the present invention.

The thickness of the positive electrode active material layer of the present invention varies depending on the intended application of the battery. However, it is preferably in the range of 10 µm to 250 µm, particularly preferably in the range of 20 µm to 200 um, most preferably in the range of 30 µm to 150 µm.

The average particle diameter of the positive electrode active material is, for example, in the range of 1 µm to 50 µm, preferably in the range of 1 µm to 20 µm, particularly preferably in the range of 3 µm to 5 µm. This is because it could be difficult to handle the positive electrode active material when the average particle diameter of the material is too small, and it could be difficult to make the positive electrode active material layer a flat layer when the average particle diameter of the positive electrode active material is too large. The average particle diameter of the positive electrode active material can be measured by, for example, measuring the diameter of particles comprising an active material carrier observed with a scanning electron microscope (SEM) and averaging the thus-obtained diameters.

As needed, the positive electrode active material layer can comprise a conducting material, a binder, etc. As the conducting material and binder, those that are described above in connection with the negative electrode active material layer can be used.

In addition to the positive electrode active material, the positive electrode active material layer can contain an electrolyte for the positive electrode. In this case, as the electrolyte for the positive electrode, there may be used a solid oxide electrolyte or solid sulfide electrolyte, a polymer electrolyte or gel electrolyte, or the like.

### [Positive electrode current collector]

The positive electrode current collector used in the present invention functions to collect current from the positive electrode active material layer. As the material for the positive electrode current collector, for example, there may be mentioned aluminum, stainless steel (SUS), nickel, iron and titanium. Of these, aluminum and SUS are preferred. As the form of the positive electrode current collector, there may be mentioned a foil form, a plate form and a mesh form, for example. Among them, a foil form is preferred.

The method for producing the positive electrode used in the present invention is not particularly limited as long as it is a method that gives the above-mentioned positive electrode. After the positive electrode active material layer is formed, the layer can be pressed to increase electrode density.

### [Air electrode]

An embodiment will be described hereinafter, in which an air electrode comprising an air electrode layer is employed as the positive electrode.
The air electrode of the battery of the present invention preferably comprises an air electrode layer. In addition to this, it generally comprises an air electrode current collector and an air electrode lead that is connected to the air electrode current collector.

### [Air electrode layer]

The air electrode layer of the battery of the present invention comprises at least a conductive material. In addition, it can contain at least one of a catalyst and a binder as needed.

The conductive material used for the air electrode layer is not particularly limited as long as it is conductive. For example, there may be mentioned a carbon material, a perovskite-type conductive material, a porous conductive polymer and a porous metal material. Especially, the carbon material can be porous or non-porous. It is preferably porous in the present invention, so that it has a large specific surface area and offers many reaction sites. As the porous carbon material, in particular, there may be mentioned mesoporous carbon, etc. As the non-porous carbon material, in particular, there may be mentioned graphite, acetylene black, carbon nanotube, carbon fiber, etc. The content of the conductive material in the air electrode layer is in the range of 65% by mass to 99% by mass for example, preferably in the range of 75% by mass to 95% by mass. This is because when the conductive material content is too small, the area of reaction sites is decreased and battery capacity could be decreased, and when the conductive material content is too large, the content of the catalyst becomes relatively small and poor catalyst performance could be obtained.

As the catalyst used for the air electrode layer, there may be used an oxygen-activating catalyst, for example. Examples of the oxygen-activating catalyst include platinum metals such as nickel and palladium, perovskite-type oxides comprising a transition metal such as cobalt, manganese or iron, inorganic compounds comprising a noble metal oxide such as ruthenium, iridium or palladium, metal coordination organic compounds having a porphyrin skeleton or phthalocyanine skeleton, and manganese oxide. The content of the catalyst in the air electrode layer is in the range of 1% by mass to 30% by mass for example, preferably in the range of 5% by mass to 20% by mass. This is because when the catalyst content is too small, poor catalyst performance could be obtained, and when the catalyst content is too large, the conductive material content becomes relatively small, so that the area of reaction sites is decreased and battery capacity could be decreased.
From the viewpoint of smooth electrode reaction, the catalyst is preferably supported by the conductive material.

The air electrode layer only has to contain at least the conductive material. However, it is more preferable that the air electrode layer further contains a binder for fixing the conductive material. As the binder, for example, there may be mentioned polyvinylidene fluoride (PVDF), polytetrafluoroethylene (PTFE) and a rubber-based resin such as styrene-butadiene rubber (SBR). The content of the binder in the air electrode layer is not preferably limited and is 30% by mass or less for example, preferably in the range of 1% by mass to 10% by mass.

The thickness of the air electrode layer varies depending on the intended application of the air battery, etc. It is preferably in the range of 2 µm to 500 µm for example, preferably in the range of 5 µm to 300 µm.

### [Air electrode current collector]

The air electrode current collector of the battery of the present invention functions to collect current from the air electrode layer. The material for the air electrode current collector is not particularly limited as long as it is conductive. For example, there may be mentioned stainless-steel, nickel, aluminum, iron, titanium and carbon. As the form of the air electrode current collector, there may be mentioned a foil form, a plate form and a mesh (grid) form, for example. Of these, in the present invention, the air electrode current collector is preferably in a mesh form from the viewpoint of excellent current collection efficiency. In this case, normally, the air electrode current collector in a mesh form is provided inside the air electrode layer. In addition, the battery of the present invention can comprise a different air electrode current collector (such as a current collector in a foil form) that collects current collected by the air electrode current collector in a mesh form. Also in the present invention, the below-mentioned battery case can also function as the air electrode current collector.
The thickness of the air electrode current collector is in the range of 10 µm to 1,000 µm for example, preferably in the range of 20 µm to 400 µm.

### 2-2. Aqueous electrolyte layer

The aqueous electrolyte layer of the battery of the present invention is formed between the above-mentioned positive electrode and solid electrolyte layer. It is a layer which is responsible for ion conduction that is necessary for charge and discharge.
The aqueous electrolyte used for the battery will be described hereinafter, taking a lithium-air battery as an example.
As the aqueous electrolyte, a mixture of water and a lithium salt is generally used. Specific examples of the lithium salt include the above-mentioned lithium salts.
Those usable as the solvent of the aqueous electrolyte include, in addition to the above-mentioned water, HCl, H₂SO₄, H₃PO₄, acetate/lithium acetate, LiOH, KOH, seawater, LiCl, NaCl, KCl, LiBr, LiI, NH₄Cl, NH₄Br, hydrogen peroxide water, etc., and mixtures thereof.
In the present invention, as the aqueous electrolyte, a low-volatile liquid such as the above-mentioned ionic liquid can be used.

### 2-3. Other constituents

The battery of the present invention can comprise a separator and a battery as other constituents.

### [Separator]

When the battery of the present invention has a structure in which a plurality of laminates are stacked, each of the laminates having the following structure: positive electrode-aqueous electrolyte layer-negative electrode structure of the present invention, it is preferable from the viewpoint of safety to provide a separator between positive and negative electrodes, each of which belongs to a different laminate. As the separator, for example, there may be mentioned a porous film such as polyethylene and polypropylene, and a nonwoven fabric such as resin nonwoven fabric and glass fiber tissue.

### [Battery case]

The battery of the present invention generally comprises a battery case for housing the positive electrode, the aqueous electrolyte layer and the negative electrode structure of the present invention, etc. As the form of the battery case, in particular, there may be mentioned a coin form, a plate form, a cylinder form and a laminate form, for example.
When the battery of the present invention is a lithium-air battery, the battery case of the same can be an open-to-the-atmosphere battery case or closed battery case. The open battery case is one that has such a structure that at least the air electrode layer can be sufficiently exposed to the air. On the other hand, when the battery case is a closed battery case, it is preferable to provide gas (air) inlet and outlet tubes to the closed battery case. In this case, it is preferable that the gas introduced/emitted through the tubes has a high oxygen concentration, and it is more preferable that the introduced/emitted gas is pure oxygen. Also, it is preferable that the oxygen concentration is high at the time of discharge and low at the time of charge.

### Examples

Especially in lithium-air batteries, an aqueous electrolyte reaches a high alkali concentration, so that the solid electrolyte of the solid electrolyte layer used in the negative electrode structure of the present invention is required to have high chemical stability in alkaline aqueous solutions.
In Examples, the resistance of various solid electrolytes to LiOH aqueous solution will be described in detail, which is a kind of alkaline aqueous solution.

### 1. Preparation of solid electrolyte

### [Example 1]

Li₇La₃Zr₂O₁₂ was prepared as the solid electrolyte of Example 1, which is a kind of garnet-type solid electrolyte and was produced by the solid phase method.

### [Comparative Example 1]

Li₂Ti (PO₄) ₃-AlPOq (Ohara glass manufactured by Ohara Inc.) was prepared as the solid electrolyte of Comparative Example 1, which is a kind of NASICON-type solid electrolyte.

### [Comparative Example 2]

Li₇BaLa₂Ta₂O₁₂ was prepared as the solid electrolyte of Comparative Example 2, which is a kind of garnet-type solid electrolyte and was produced by the solid phase method.

### [Comparative Example 3]

Li₅La₃Ta₂O₁₂ was prepared as the solid electrolyte of Comparative Example 3, which is a garnet-type solid electrolyte and was produced by the solid phase method.

### 2. Immersion experiment

The solid electrolytes of Example 1 and Comparative Examples 1 to 3 were each immersed in a 1 M LiOH aqueous solution for three weeks. The solid electrolyte of Comparative Example 3 was decomposed in the LiOH aqueous solution after the three weeks.
After the three weeks of immersion, the solid electrolytes of Example 1 and Comparative Examples 1 and 2 were analyzed for their structural change. Moreover, elementary analysis was performed on the LiOH aqueous solution used for the immersion.

### 2-1. Analysis for structural change in the solid electrolytes

X-ray diffraction (hereinafter abbreviated to XRD) measurement was performed on the solid electrolytes of Example 1 and Comparative Examples 1 and 2. A powder X-ray diffractometer (RINT-Ultima III manufactured by Rigaku Corporation) was used for the XRD measurement.

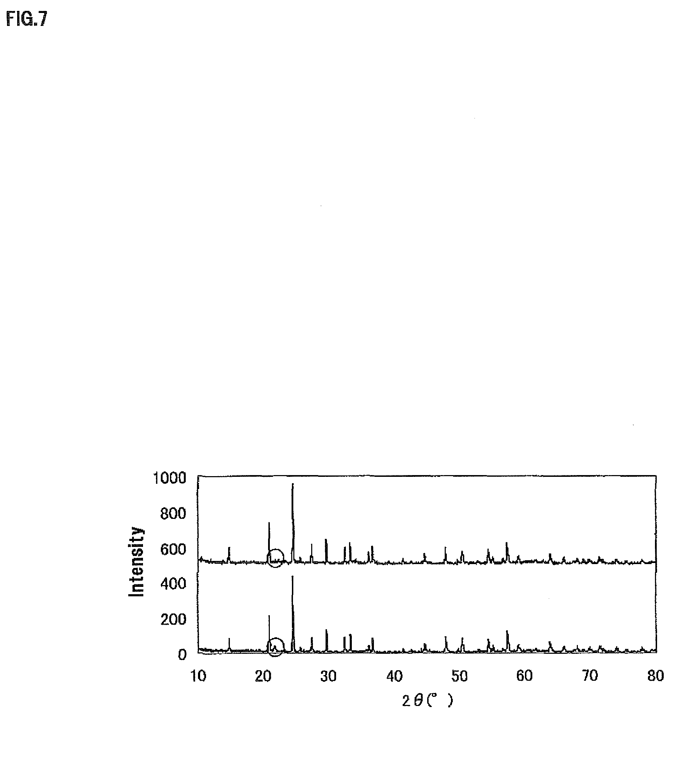

FIG. 7 is a view showing XRD patterns of the solid electrolyte of Comparative Example 1 before (the pattern below) and after (the pattern above) the solid electrolyte was immersed in LiOH. In the XRD patterns of the solid electrolyte of Comparative Example 1, as is clear from the comparison between the above and below XRD patterns, the peak which was present near 2θ=20° before the immersion in LiOH, disappeared after the immersion. It shows that the crystal structure of Li₂Ti (PO₄) ₃-AlPO₄ was changed by the long-term immersion in LiOH.

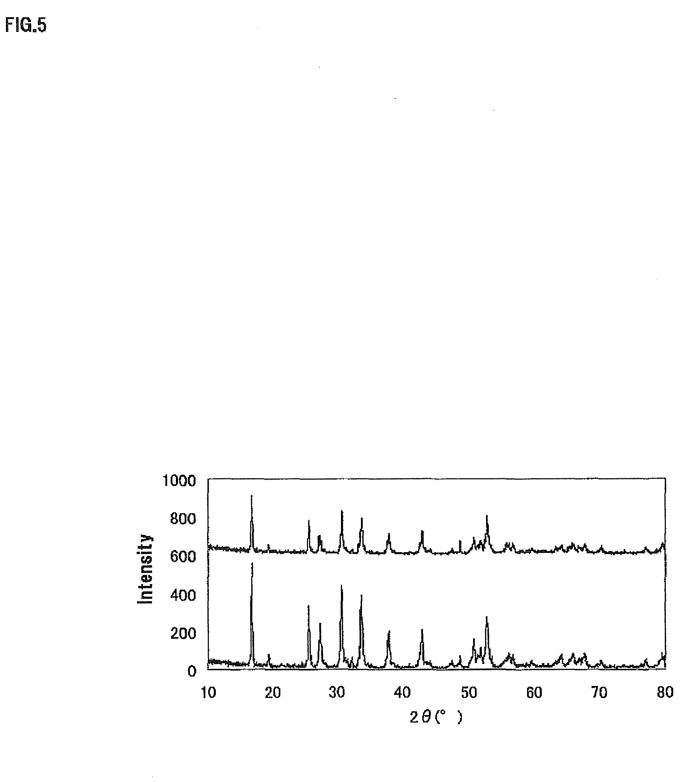

FIG. 5 is a view showing XRD patterns of the solid electrolyte of Example 1 before (the pattern below) and after (the pattern above) the solid electrolyte was immersed in LiOH. As is clear from the comparison between the above and below XRD patterns, there is no change in the XRD patterns of the solid electrolyte of Example 1 before and after the immersion in LiOH. It shows that the crystal structure of Li₇La₃Zr₂O₁₂ was not changed even after the long-term immersion in LiOH and Li₇La₃Zr₂O₁₂ has sufficient resistance to alkalis.

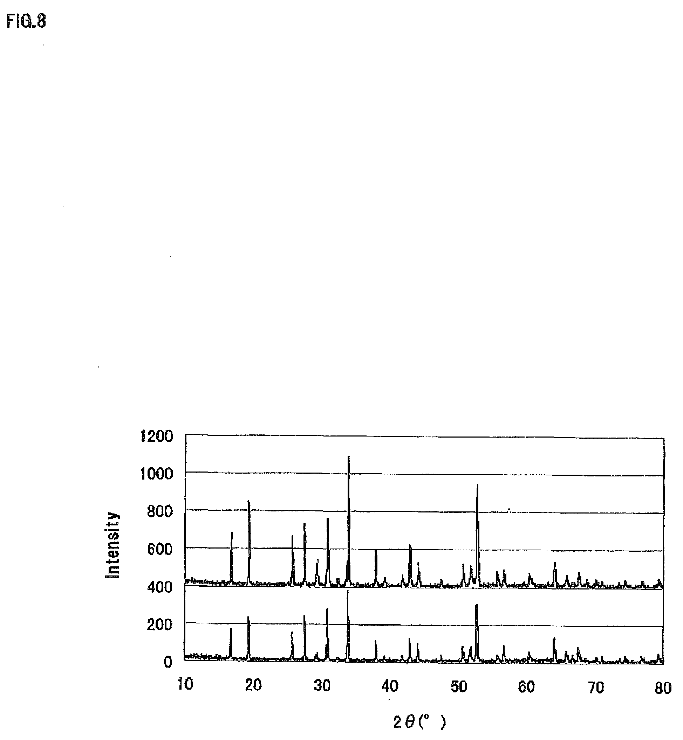

FIG. 8 is a view showing XRD patterns of the solid electrolyte of Comparative Example 2 before (the pattern below) and after (the pattern above) the solid electrolyte was immersed in LiOH. As is clear from the comparison between the above and below XRD patterns, there is also no change in the XRD patterns of the solid electrolyte of Comparative Example 2 before and after the immersion in LiOH.

### 2-2. Elementary analysis of the LiOH aqueous solution used for the immersion

X-ray fluorescence (hereinafter abbreviated as XRF) analysis measurement was performed on each of the LiOH aqueous solutions before and after the immersion of the solid electrolytes of Example 1 and Comparative Example 2 to analyze the components dissolved in the aqueous solutions. A scanning X-ray fluorescence spectrometer (ZSX Primus II manufactured by Rigaku Corporation) was used for the XRF analysis measurement.

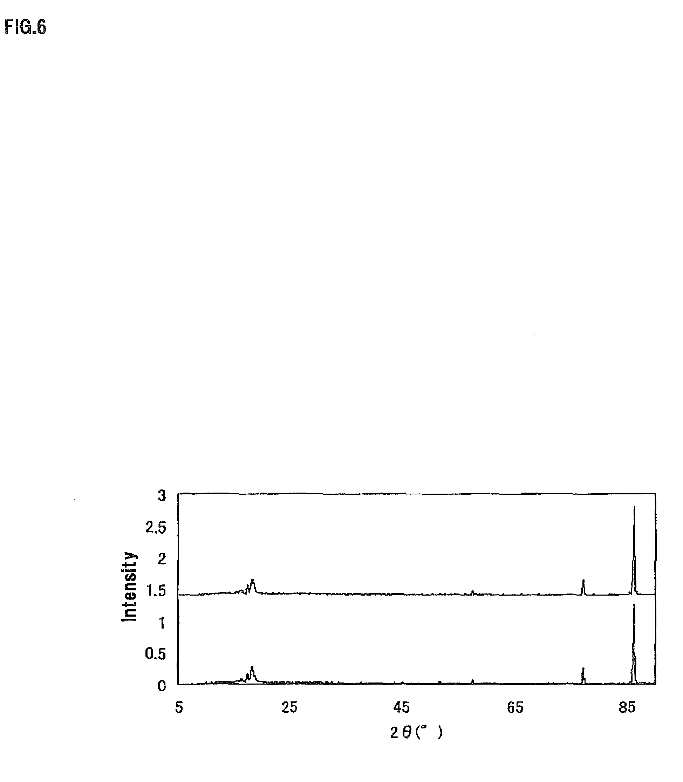

FIG. 6 is a view showing XRF patterns of an LiOH aqueous solution before (the pattern below) and after (the pattern above) the solid electrolyte of Example 1 was immersed in the aqueous solution. As is clear from the comparison between the above and below XRF patterns, there is no change in the XRF patterns of the LiOH aqueous solution used for the immersion of the solid electrolyte of Example 1. It shows that the components of Li₇La₃Zr₂O₁₂ were not eluted into the LiOH aqueous solution after the long-term immersion in LiOH and Li₇La₃Zr₂O₁₂ has high resistance to alkalis.

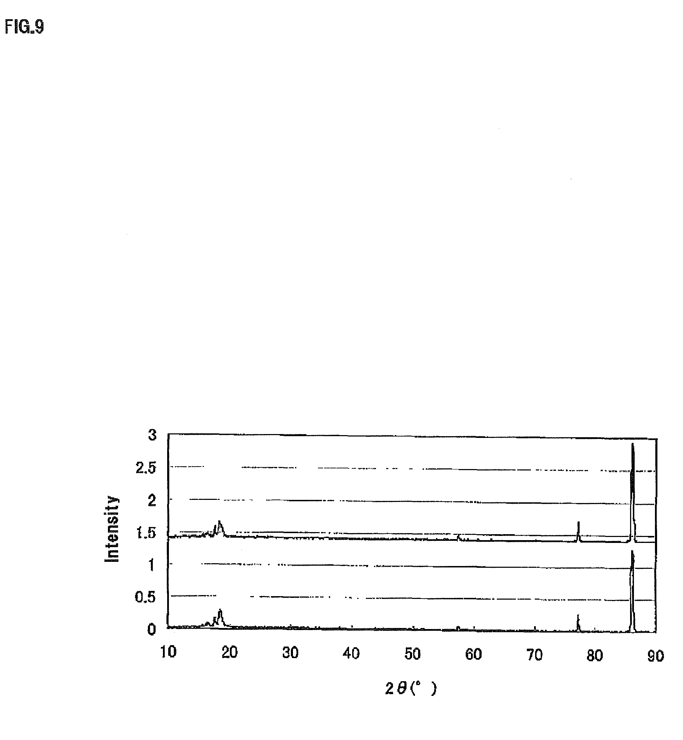

FIG. 9 is a view showing XRF patterns of an LiOH aqueous solution before (the pattern below) and after (the pattern above) the solid electrolyte of Comparative Example 2 was immersed in the aqueous solution. As is clear from the comparison between the above and below XRF patterns, there is also no change in the XRF patterns of the LiOH aqueous solution used for the immersion of the solid electrolyte of Comparative Example 2 before and after the immersion of the solid electrolyte.

Inductively coupled plasma-mass spectrometry (hereinafter abbreviated as ICP-MS) measurement was performed on each of the LiOH aqueous solutions before and after the immersion of the solid electrolytes of Example 1 and Comparative Example 2 to analyze the components dissolved in the aqueous solutions. A high-frequency plasma emission spectrometer (ICPV-8100 manufactured by Shimadzu Corporation) was used for the ICP-MS measurement.

Table 1 shows the ICP-MS measurement results of the LiOH aqueous solutions used for the immersion of the solid electrolyte of Example 1 and Comparative Example 2. As is clear from Table 1, from the LiOH aqueous solution used for the immersion of the solid electrolyte of Comparative Example 2, Ba was detected in a concentration of 1. 6 mg/L, which was derived from the solid electrolyte of Comparative Example 2. Meanwhile, in the LiOH aqueous solution used for the immersion of the solid electrolyte of Example 1, Zr concentration was less than the detection limit (0.1 mg/L), which was derived from the solid electrolyte of Example 1. This result shows that the solid electrolyte of Comparative Example 2 can be eluted in the LiOH aqueous solution; however, the solid electrolyte of Example 1 cannot be eluted in the LiOH aqueous solution and has high resistant to alkalis.

**Table 1**

| | Zr | Ba |
|---|---|---|
| Example 1 (Li₇La₃Zr₂O₁₂) | <0.1 mg/L | - |
| Comparative Example 2 (Li₇SaLa₂Ta₂O₁₂) | - | 1.6 mg/L |

### 3. Summary

Table 2 shows the results of the XRD measurement, XRF measurement and ICP-MS measurement. As shown in Table 2, as a result of the immersion in the LiOH aqueous solution, the solid electrolytes of Comparative Examples 1 to 3 showed at least one of structural change and elution into the LiOH aqueous solution, so that these solid electrolytes were found to have no resistance to alkalis. In contrast, the solid electrolyte of Example 1 caused no structural change and was not eluted in the LiOH aqueous solution even after the immersion in the LiOH aqueous solution. Therefore, the solid electrolyte of Example 1 was found to have high resistance to alkalis.

**Table 2**

| | Structural Change | Elution into Aqueous Solution |
|---|---|---|
| Example 1 (Li₇La₃Zr₂O₁₂) | No | No |
| Comparative Example 1 (Li₂Ti(PO₄)₃-AlPO₄) | Yes | - |
| Comparative Example 2 (Li₇BaLa₂Ta₂O₁₂) | No | Yes |
| Comparative Example 3 (Li₅La₃Ta₂O₁₂) | Yes | - |

### Reference Signs List

1. Negative electrode active material layer
2. Solid electrolyte layer
3. Aqueous electrolyte layer
4. Battery case
5. Non-aqueous electrolyte layer
6. Positive electrode active material layer
10 and 20. Negative electrode structure
100 and 200. Aqueous electrolyte battery

## Claims

1. A negative electrode structure for aqueous electrolyte batteries, comprising at least a negative electrode active material layer,
wherein the negative electrode active material layer comprises, as the negative electrode active material, at least one selected from the group consisting of the following metals and alloys comprising at least one of the metals: Li, Na, K, Ca, Mg, Zn, Al and Ag, and
wherein a solid electrolyte layer comprising a Zr-containing garnet-type solid electrolyte described by the following formula (1), is provided on one side of the negative electrode active material layer:
Formula (1): Li₅₊ₓLa_{y}Zr_{z}O₁₂
wherein 0<x≤3, 0≤y≤3 and 0≤z≤2.

2. The negative electrode structure for aqueous electrolyte batteries according to Claim 1, wherein a non-aqueous electrolyte layer is provided between the negative electrode active material layer and the solid electrolyte layer.

3. An aqueous electrolyte battery in which a positive electrode is provided on one side of an aqueous electrolyte layer and the negative electrode structure defined by Claim 1 or 2 is provided on the other side of the aqueous electrolyte layer,
wherein the solid electrolyte layer of the negative electrode structure is arranged to face the aqueous electrolyte layer.

4. The aqueous electrolyte battery according to Claim 3, which is a lithium secondary battery.

5. The aqueous electrolyte battery according to Claim 3, which is a lithium-air battery.
